# EUROPEAN PATENT SPECIFICATION

(11) **EP 4 567 759 B1**
(45) Date of publication and mention of the grant of the patent: **08.07.2026**
(21) Application number: 23214402.2
(22) Date of filing: 05.12.2023
(51) Int. Cl.: G07F 7/06, G07F 11/26, B65G 17/00, B65G 25/04, B65G 47/00, B07C 5/36, B65G 47/14, B65G 15/42, B65G 17/08

(54) **CONTAINER RETURN SYSTEM HAVING A BI-DIRECTIONAL CONVEYOR**
BEHÄLTERRÜCKNAHMESYSTEM MIT BIDIREKTIONALEM FÖRDERER
SYSTÈME DE RETOUR DE RÉCIPIENT DOTÉ D'UN TRANSPORTEUR BIDIRECTIONNEL

(43) Date of publication of application: 11.06.2025
(73) Proprietor: Tomra Systems ASA, 1385 Asker (NO)
(72) Inventor: PETTERSEN, Fredrik, 0188 Oslo (NO); HOLMESLAND, Shelly, 1394 Nesbru (NO)
(74) Representative: AWA Sweden AB

(56) References cited:
- EP-A1- 1 107 194
- EP-B1- 3 481 753
- WO-A1-2020/089436
- US-A1- 2001 017 254

## Description

### Field of the invention

The present inventive concept relates to a method and a system for receiving a bulk of used deposit return containers for recycling or reuse.

More specifically a system comprising a conveyor for transporting deposit return containers from an infeed region towards a classification unit, where containers classified as not-accepted are returned to a user.

### Background art

Devices for receiving, identifying and/or sorting objects, such as used beverage or food containers, may be used in reverse vending machines in e.g. super markets. Many times, these devices receive the containers one by one, and a user therefore must feed the containers one by one to the device. Many times, containers fed to the devices are returned to the user when the machine has classified the container as not accepted. This can be a time consuming effort for the user.

There exists container return systems configured to receive a bulk of containers. Such container return systems often comprises classification units to determine which containers are to be accepted and which are to be returned to the user.

EP3481753A1 discloses a device and method for the singulation of containers received in bulk by providing a feed region for bulk containers and a transporting assembly with an elevating member configured to engage and lift individual containers from the bulk feed into a controlled singulated stream.

EP1107194A1 relates to a conveyor system having a bi-directional conveyor arrangement comprising a conveyor belt or similar conveying element that is operable to transport articles in either of two opposing directions along a conveyance path.

However, there is a need for improvement of the bulk feed sorting as well as improved return of containers classified as not accepted.

### Summary of the invention

To achieve at least one of the above objects and also other objects that will be evident from the following description, a container return system having the features defined in claim 1 is provided according to the present invention. Preferred embodiments will be evident from the dependent claims. More specifically, there is provided according to a first aspect of the present invention a container return system configured to receive a bulk of deposit return containers such as used food or beverage containers through an infeed opening. The container return system comprising:
a classification unit configured to classify containers into a category selected from a group comprising at least accepted and not accepted,
a bi-directional conveyor (102) having a front end (104), a remote end (106) and a transporting surface (108) extending between said front end (104) and said remote end(106), which bi-directional conveyor (102) comprises an infeed region (110) and an access region (112) both arranged at the front end (104 of the bi-directional conveyor (102) and the bi-directional conveyor (102) further comprises a remote region (114) which is arranged closer to the remote end (106) of the bi-directional conveyor (102) compared to said access region (112), and the bi-directional conveyor (102) being configured to move the transporting surface (108) in an infeed direction (ID) and a return direction (RD) which two directions are opposite to each other,
which container return system has a receive mode and a return mode and which bi-directional conveyor (102) is configured to in the receive mode: transport deposit return containers from said infeed region (110) towards classification unit by moving the transporting surface (108) in the infeed direction (ID); and

in the return mode: transport deposit return containers from said remote region (114) to said access region (112), where a user may pick up the deposit return containers;
wherein said container return system further comprises a diverter (116) having a diverting position wherein the diverter (116) is arranged across and at a distance above said transporting surface (108), and being configured to steer a deposit return container to the side of said conveyor when arranged in said diverting position and the deposit return containers are transported by said bi-directional conveyor (102) from the infeed region (110) towards the classification unit,
said bi-directional conveyor (102) comprises:
   at least one wedge shaped flight (120), each wedge shaped flight (120) having a low end (122), a high end (124), a top surface (126)and a bottom surface (128) and being pivotably attached to said bi-directional conveyor (102) and pivotable between a collapsed position and an elevated position, wherein each wedge shaped flight (120) in its elevated position extends higher above the transporting surface (108) of said conveyor compared to when the wedge shaped flight (120) is in its collapsed position,
   at least one pair of an elevation member (202) and a retention member (204) arranged adjacent to each other, which elevation member (202) is arranged beneath and gradually closer to said transporting surface (108) along the infeed direction (ID) of the conveyor, and configured to pivot said wedge shaped flight (120) from the collapsed position to the upraised position when said wedge shaped flight (120) passes said elevation member (202) in the infeed direction (ID);
   and which retention member (204) arranged beneath said transporting surface (108) and after said retention member (204) in the infeed direction (ID) and being configured to retain the wedge shaped flight (120) in the elevated position when said wedge shaped flight (120) passes said retention member (204) in the infeed direction (ID),
   wherein at least when said flight (120) is in its elevated position:
      - the highest point of the wedge shaped flight (120) coincides with the junction between the high end (124) and the top surface (126) of the wedge shaped flight (120),
      - the high end (124) of the wedge shaped flight (120) trails the low end (122) of the wedge shaped flight (120) when the transporting surface (108) moves in the return direction (RD),
      - the top surface (126) slopes downwards as seen in the return direction (RD),
      - at least the upper third of the high end (124) slopes upwards as seen in the return direction (RD),
      - the top surface (126) is longer than the height of the high end (124),
      - the height of the wedge shaped flight (120) is lower that the distance between the transporting surface (108) and the diverter (116) to enable the wedge shaped flight (120) to pass under the diverter,
   wherein all the pairs of elevation members (202) and retention members (204) are arranged outside the access area (112).

In the context of this application, a container return system may be any system adapted to collect, sort, crush, compact and/or convey used deposit return containers for recycling or reuse, including used food or beverage containers, such as empty beverage bottles and cans, or glasses and/or cups such as coffee cups, of any size and material, such as PET, aluminum, tin, or glass. A deposit return container, may be a container which upon its return is eligible for a refund such as a "pfand" from the Deutsche Pfandsystem GmbH (DPG). Such a system may be used by professional operators, for example in recycling centers collecting used beverage containers from the restaurant industry. An example of such a system is the device for singulation of used beverage containers received in bulk described in EP 3481753A1. A container return system may also be a reverse vending machine (RVM) located, for example, in a supermarket, where an end-consumer feeds used food and beverage containers into the container return system. Typically, only the front of the container return system, including the infeed area, is visible and accessible to the end-consumer, with a backroom facility only accessible to store employees or other authorized personnel.

The term used container should be interpreted as empty container, e.g. after (most of) the contents of the container has been drunk, eaten, disposed of or otherwise used. Sometimes the used container is completely empty when fed into the container return system, sometimes it is not, but contains some liquid and/or amount of the *previous* content. Many times the container content has been e.g. poured out and only some residues remain which was not easily poured out at the time.

A container return system as described herein may also be used to receive other types of recyclable or reusable containers. As non-limiting examples, a container return system according to the present inventive concept may be configured to receive used containers for cosmetics such as shampoo bottles and/or, paint, and/or chemicals, and/or any other type of consumer or professional product.

By bulk it is meant that more than one used container can be received by the container return system simultaneously, and preferably that the used containers can be of various shapes and sizes, such as cans, substantially cylindrical, square or odd-shaped bottles or containers, TetraPak containers, etc. Furthermore, the used containers may be made of different materials, such as plastic, paper, metal or glass, or a combination thereof. The container return system may be adapted to handle all or some of the different standard sizes of containers in different countries; and preferably configured to only handle a predetermined list of containers, if other containers are entered they will after inspection preferably be treated as an foreign object. It may e.g. be able to handle a mix of 33 cl and 50 cl aluminum cans, as well as 33 cl, 50 cl and 1.5 L PET bottles.

In relation to this inventive concept the expression "The container return system is adapted or configured to handle a certain type of container" means that the container return system is adapted or configured to receive, transport and process this certain type of container. It is understood that a container return system which handles a certain type of container is adapted or configured to receive, transport and process this certain type of container.

According to one example, the diameter, or length, of the used containers received and transported by the container return system is at least 20 mm or at least 50 mm, and/or at most 150 mm, or at most 200 mm, or at most 350 mm. Additionally or alternatively, the height (i.e. the longest side) of the containers received and transported by the container return system is at least 50 mm, or at least 75 mm and/or at most 200 mm, or at most 380 mm, or at most 500 mm. Additionally or alternatively, the weight of the used containers that are received and transported by the container return system is at least 10 g, and/or at most 3 kg, or at most 5 kg. Additionally or alternatively, the volume of the used containers that are received and transported by the container return system is at least 10 ml, or at least 50 ml, and/or at most 3 L, or at most 5 L, or at most 8 L.

According to one example, the height (i.e. the longest side) of the smallest used container handled by the return system is smaller than the diameter of the largest used container handled by the container return system.

The used containers classified as accepted by the classification unit may be transported to storage containers. Optionally, the used containers classified as accepted by the classification unit may be transported to different storage containers depending on the material and/or type of the used containers. Optionally, the used containers may be devaluated before being transported to storage containers. For example, the used containers may be compacted and/or crushed before being transported to storage containers. Thus, a container return system according to the first, second or third aspect may optionally comprise devaluation means for devaluating used containers.

The conveying part of the conveyor may e.g. be formed of a belt, e.g. a continuous reinforced textile belt or a modular belt. A modular belt comprises individual modules, also referred to as belt pieces, which are linked together e.g. with joint rods. The modular belt is optionally made of plastic and may be driven by chain sprockets, and the base frame of the conveyor may be constructed on standard profile supports. The individual modules may all have the same shape and surface area, or the modular belt may be formed of individual modules having e.g. 2 or 3 or at least 4 different designs. According to one example all designs have the same length, according to an alternative example, at least one design has a length which is different from the length of the other designs. According to yet another example each design has a unique length. Optionally, each design has a unique width, or at least one design has a different width compared to the other designs.

One important consideration when designing RVM:s is the user's safety, which is e.g. discussed in the ISO 12100:2010 - Safety of machinery directive. In addition to this, there are some other basic requirements that often needs to be fulfilled by a Container return system to allow it to be successful, relating e.g. to transportation speed, accuracy of verification, batch size (number of returnable objects that may be accepted in per filling) throughput (process time per batch), long term throughput (number of processed batches over time).

In view of the above, the obvious solution for increasing throughput and long term throughput would be to increase the transportation speed of the conveyors; also, the designers of RVM's knows that to keep the above numbers high one should implement as few movable parts as possible to avoid downtime and jamming of the machine when movable parts get stuck, especially as the conveyors are often placed in confined compartments not easy to reach and mend, why regular jams may considerably decrease the in long term through put.

In essence, the invention is based on an insight that by a combination cleverly selected features the inventors have managed to enable an increase of both the accuracy and the throughput, and often also the long term through put, without compromising the user safety; in more detail, what the inventors have provided is a bi-directional conveyor with small collapsable flights of having a specific and smooth geometry.

By adapting the flights such that the flights are collapsible, the risk of pinching and harming the hands or fingers is reduced in the access region. A wedge shape of the flight allows for a pivotable movement to be applied in elevating and collapsing the flights which can facilitate the elevation of the flight.

The flight being elevated along a portion of the conveyor allows for the solution of an efficient transportation of containers in a dual direction, as well as providing a safe area being the access region for accessing the not accepted containers.

In the receive mode the flights are elevated after the infeed region and the access region and the flight provide interference with containers on the conveyor. Deposit return containers are often empty containers having a low weight, which have a probability of getting stuck on the conveyor. For example, aluminum or plastic cans or bottles have truly little weight. When the conveyor is transporting the containers, such containers may enter a free spin mode or an endless spin where they just spin around, and do not follow the transportation direction.

Other containers that might be transported are for example cardboard cartons, which may have edges that can get stuck to a side of the conveyor.

The transporting surface can be formed in various ways, it may e.g. be a the upper part of a modular belt formed e.g. belt pieces made of plastic.

The diverter may have a shape and form so that the diverter can be adapted to deflect the containers to a side of the conveyor towards a classification unit. When the diverter extends across the conveyor, the diverter may be arranges such that when a container reaches the diverter, the intersection of the container and the diverter changes the direction of the container to the side of the conveyor.

After the classification unit has determined if the container is accepted or not, the non-accepted containers can be returned to the access area. In the Return mode, the diver is in a non-diverting position allowing for container to be transported from the remote region to the access region. The flights will perform a similar action in the return mode, disturbing the containers and preventing containers from getting stuck on the conveyor.

The flight is provided with an acute angle between the transporting surface and the top surface of the flight at the low end.

Further advantages of the provided system are that the angle of the flight at the low end in the return mode is such that if there is a minor error in the flight not collapsing in the safe access area, the flight preferably collapses upon a user lightly pressing the flight. Hence, the angle allows for the user to access the area of not accepted containers without risk of harming fingers. Overall a container return system is provided having improved safety measures for a user. Several features provide a synergistic effect of efficient transport on the conveyor while allowing for a safe region to outtake containers on the conveyor.

In some examples the diverter is movable between a diverting position and a non-diverting position. The diverter may be pivotably movable or pivotable around an axis of rotation. The diverter may have the function of directing containers on the conveyor off the conveyor towards the classification unit and/or towards a singulation device. The singulation device may be arranged upstream of the classification unit. The diverter is preferably in the diverting position in the receive mode or during one or more instance of the receive mode, and in the non-diverting position in the return mode or during at least one or more instances of the return mode. According to other examples, diverter is in the non-diverting position during the receive mode or during at least one or more instance of the receive mode, and in the diverting position during the return mode or during at least one or more instance of the return mode.

In some examples each flight comprises a recess configured such that the flight can be attached to the conveyor via a snap attachment. Such a configuration facilitates the removal and later attachment of flights to the conveyor e.g. for cleaning purposes. In some examples the flight comprises more than one recess. Advantageously a flight can be attached to a variety of conveyors not limiting the use of the flight. A further advantage presented by the snap function, is that the conveyor does not need to be dismantled in order to attach the flight, but the flight may be attached in a space previously occupied by a belt portion, e.g. a belt piece when a modular belt is used.

In some examples the conveyor comprises a plurality of flights arranged in a zig zag pattern along the conveyor in the infeed direction. Advantageously, preventing containers from getting stuck or jammed or stuck in a free spin mode along the conveyor. A zig zag pattern may provide an improved even flow of container along the conveyor. Furthermore, in cases when the flights are distributed along the full length and/or width of the conveyor, the flights may reach any container along the conveyor. This is advantageous since it reduces the risk of containers getting stuck or jammed on the conveyor.

In some examples the deposit return containers have a predetermined minimum height and minimum width, and said conveyor return system further comprises two side rails 130, each rail being arranged on a respective distal side of the transporting surface in the infeed direction, and at least one wedge shaped flight is attached to the conveyor at a distance from one of said side rails 130, which distance is less than the minimum height. Advantageously preventing any containers from getting stuck on the conveyor in the vicinity of the rails 130.

In some examples the flight has a rounded top portion. Additionally or alternatively, the top surface is substantially flat and/or curved. According to some examples the top surface is curved along one axis or two axes.

The transporting surface or the modular belt may have a cut out configured to allow the flight to be raised above the transporting surface. It is beneficial to have the cut out sized such that there is a limited gap or play between the flight and the transporting surface. If the gap is too large, this may cause a container to get jammed or stuck therein.

There is also a risk that a container may get jammed in the cur out when the flight is in the collapsed position.

A flight with a rounded top portion, and/or wherein the top surface is substantially flat and/or curved may provide an advantage since the cut out in the transporting surface can be configured such that there is a reduced or no gap between the flight and the transporting surface in the collapsed and/or elevated position.

In some examples the lower part of said high end is substantially vertical.

In some examples, in an event of a flight being in the upraised position in the access region, the flight is configured to return to the collapsed position upon reaching a stationary finger and the transporting surface is moving in the return direction. Advantageously, preventing and/or reducing the risk of pinched or hit fingers in the access region.

In some examples the transporting surface and/or each flight is made of polymeric material, e.g. a plastic..

In some examples, the container return system further comprises a slide or chute configured for transporting the deposit return containers from said infeed opening to said infeed region. The chute may be arranged and/or extend a distance between the infeed opening and the infeed region.

In some examples the infeed region and the access region are at least partially overlapping. In some examples the infeed region and the access region are separated areas. In some examples, the infeed region and the access region completely overlap.

According to a second aspect, the container return system does not comprise a diverter. In such examples, the containers may be guided towards the classification unit which may be at or after the remote end of the bi-directional conveyor. In other examples, the classification unit is located above or below the conveyor.

According to a third aspect of the disclosure, there is provided a flight configured to be attached to a bi-directional conveyor.

The flight may comprise a recess for a snap in attachment. The flight may have a wedge shape as seen from the surface of the bi-directional conveyor.

The conveyor may optionally be formed or made by several belt pieces connected and intertwined similarly to a puzzle. The conveyor may be a modular belt. The modular belt, the joint rod or the belt pieces may comprise a rod or pin whereto a flight may be attached by a snap function. In other examples, the flight may be configured such that the recess is adapted to fit into structure of the conveyor in place of a belt piece, thereby allowing for the snap function and hence a facilitated attachment of the flight; which may eliminate or reduce the need to disassemble an already set up conveyor. A further advantage is that the flight can be attached to already in use bi-directional conveyors, e.g. to improve efficiency of the bi-directional conveyor by reducing the risk of objects getting stuck on bi-directional conveyors.

According to a fourth aspect of the disclosure, there is provided a container return system comprising a bi-directional conveyor, at least one flight, an elevation member and a retention member. The elevation and/or retention and/or lowering of the flight may be achieved e.g. by a sliding action or a cam action, or an actuator or a parallel lifting; each of these means may be arranged beneath the transporting surface of the conveyor.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 shows a perspective view of an example of a bi-directional conveyor.
Fig. 2a shows a perspective view of a flight.
Fig. 2b shows a perspective view of a flight from the side.
Fig. 2c shows a perspective view of a flight.
Fig. 3a shows a perspective of a top view of a bi-directional conveyor.
Fig 3b shows a perspective of a top view of a bi-directional conveyor.
Fig. 4a shows a close up side view of a front end of a conveyor.
Fig. 4b shows the front end of the conveyor of Fig. 2a from the side.
Fig. 5 shows a perspective view of an example of a bi-directional conveyor.

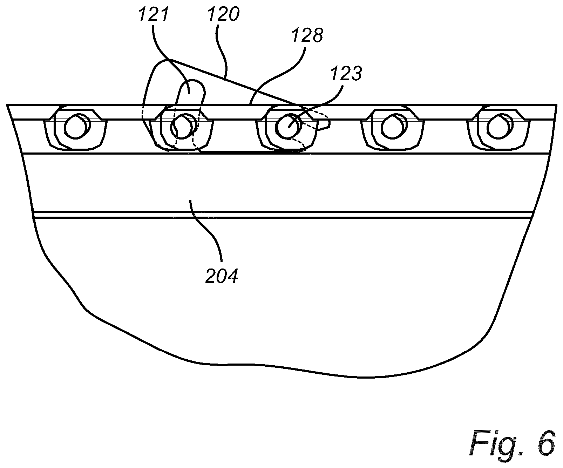

Fig. 6 shows a side view of a flight attached to a bi-directional conveyor.
Fig. 7a shows a close up view of a flight attached to a modular belt.
Fig. 7b shows an elevated flight attached to a modular belt.
Fig. 7c shows a top view of the flight of Fig. 7b.

### Description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

It will be appreciated that the present invention is not limited to the embodiments shown. Several modifications and variations are thus conceivable within the scope of the invention which thus is exclusively defined by the appended claims.

The present container return system is configured to receive a bulk of deposit return containers, such as used food or beverage containers through an infeed opening. The container return system comprises a classification unit which is configured to classify a deposit return container as accepted or not accepted. The classification unit may have other classifiers beyond accepted and not accepted. If accepted, the deposit return container may have a crusher for crushing the deposit return container, or other suitable means for handling the accepted container. If the deposit return container is determined to be not accepted, the deposit return containers is to be returned to the user. In the present inventive concept, the returned deposit return containers can be accessed by a user through the same infeed opening as is used to enter deposit return containers into the container return system.

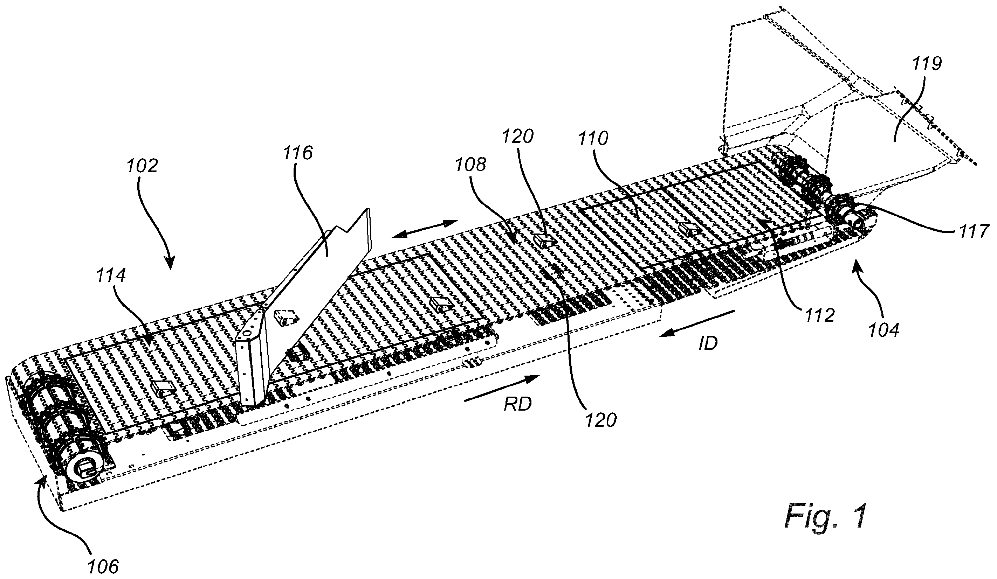

Fig. 1 shows a perspective view of an example of a bi-directional conveyor 102, for a container return system. The container return system is configured to receive a bulk of used deposit return containers or used containers through an infeed region 110. The two directions of the bi-directional conveyor 102 are an infeed direction ID and a return direction RD. As can be seen form the figure, the conveyor is straight. The infeed direction ID and the return direction RD, are as seen from above the conveyor, in the transport directions. It should however be comprehended that the conveyor does not need to be straight, but can have different shapes, such as a curve or s-shape, or any other shape.

The bi-directional conveyor 102 has a front end 104, and a remote end 106. A transporting surface 108 extends between the front end 104 and the remote end 106.

The container return system may comprise a chute or slide 119 via which deposit return containers can reach the bi-directional conveyor 102. The chute 119 may facilitate the loading of the bulk containers into the container return system. The chute 119 may provide a distance between the infeed opening of the container return system and the infeed region 110 of the bi-directional conveyor. Meaning, for example, that the user can enter the deposit return containers at the infeed opening, whereafter the containers are transported to the infeed region 110 via the chute 119.

The bi-directional conveyor 102 is designed to transport deposit return containers in the infeed direction ID when the system is in the receive mode. Deposit return containers are transported from the infeed region 110 towards the classification by moving the transporting surface in the infeed direction ID.

The bi-directional conveyor 102 is designed to transport deposit return containers in the return direction RD when the system is in the return mode.

This happens by the bi-directional conveyor 102 moving the transport surface 108 in the return direction RD. Preferably the infeed direction ID and the return direction RD are opposite directions to one another.

When deposit return containers reach the conveyor, the containers land on the transporting surface 108 at the front end 104 of the bi-directional conveyor 102. At the front end 104 there is an infeed region 110 symbolizing where the deposit return containers may enter the conveyor.

The bi-directional conveyor 102 is configured to run in the return direction RD during the return mode, when the not accepted deposit return containers are returned. To return containers, the deposit return containers are transported from the remote region 114 to an access region 112 by moving the transporting surface 102 in the return direction RD.

The access region 112 is arranged about the front end 104 of the bi-directional conveyor 102. A user can access the returned containers at the access region 112. The access region 112 may partially overlap with the infeed region 110. In some examples, the infeed region 100, and the access region 112 are completely overlapping.

The access region 112 provides the system with a region in which the user can place their hands in order to retrieve containers in a safe manner.

A remote region 114 is arranged closer to the remote end 106 when compared to the access region 112 and the infeed region 110.

In the disclosed figure, the bi-directional conveyor 102 comprises a diverter 116. The diverter 116 is positioned in a diverting position across the conveyor. The angle may be 45 degrees to the conveyor or any suitable angle. The diverter in some examples forces the containers that are transported on the conveyor to a side thereof. After leaving the bi-directional conveyor the deposit return containers can be transported to the classification unit.

The diverter 116 may be movable between the diverting position and the non-diverting position. The diverter 116 may be pivotably movable. In some examples the diverter 116 is lifted and turned to swap positions. The diverter 116 may be movable or fixed.

In some examples, the diverter 116 is in the diverting position during the receive mode, and in the non-diverting position in the return mode.

According to some aspects of the inventive concept, the container return system does not comprise a diverter 116. Instead, the classification unit may for example be located beyond the remote end 106. A transportation means may be located at the remote end 106 for transporting the deposit return container to the classification unit. The classification unit may be located at a suitable place to improve efficiency of the system.

The bi-directional conveyor 102 comprises at least one flight 120. As is seen in Fig. 1 the bi-directional conveyor may comprise a plurality of flights 120. The flights 120 may be arranged on the conveyor along two lines. In some examples the flights 120 are arranged in a zig zag pattern. The flights are preferably arranged such as to avoid being in the same line as the gears 117 that drives the conveyor. There are no limitations to how the flights 120 can be arranged on the conveyor.

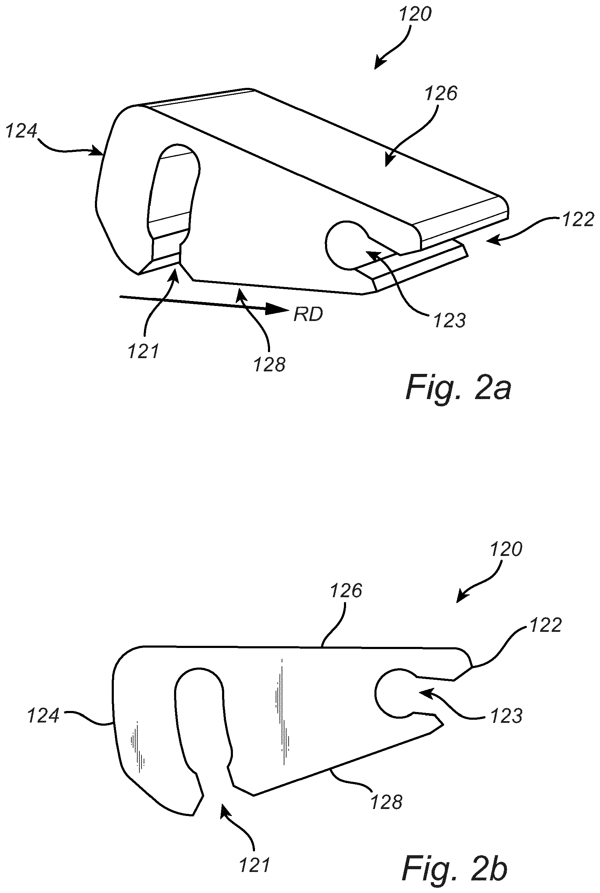

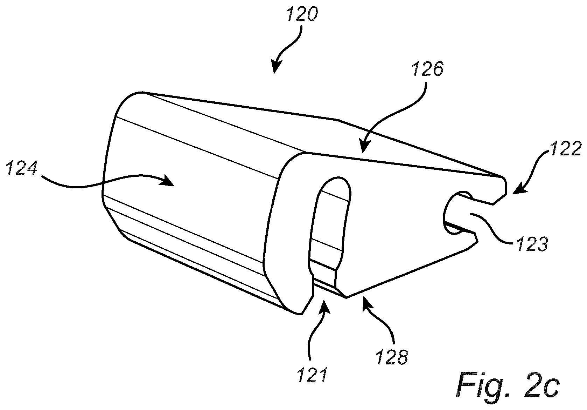

An example of a flight is shown in Fig. 2a. The flight shown has a wedge shape. It should be noted that other shapes of the flight may be possible and have advantages. Figs. 2b and 2c shows the flight from different angles.

The flight 120 may have the wedge shape at least as seen/measured from the transporting surface 108 of the conveyor when the flight is in its elevated position.

The wedge shaped flight 120 has a low end 122, a high end 124, a top surface 126 and a bottom surface 128. The flight 120 is or is configured to be pivotably attached to the bi-directional conveyor 102 and pivotable between a collapsed position and an elevated position by means of e.g. a slide or ramp. In other examples, the flight may have other means for enabling movement between the collapse and elevated position. For example, by an actuator, or a camming, or a parallel lifting. The flight 120 extends higher above the transporting surface 108 when it is in the elevated position compared to when it is in the collapsed position. Optionally, one or both of the recesses 121,123 controls the position of the flight when in the collapsed position.

The bottom surface 128 may be substantially in the same plane as the transporting surface 108 when the flight is in the elevated position.

When the flight is in an elevated position, the high end 124 and the top surface 126 meet at the highest port of the flight 120. The high end 124 of the wedge shaped flight trails the low end 122 of the wedge shaped flight when the transporting surface moves in the return direction. The top surface 126 slopes downwards as seen in the return direction. For example, the top surface 126 may be straight but may in other examples be curved, concave or have another shape. The top surface is preferably configured as a surface that would not harm a user if their finger slides along the flight in a direction opposite to the return direction.

In the elevated position, at least a portion of the high end 124 slopes upwards as seen in the return direction. For example, an upper third of the high end 124 may slope upwards, or at least half of the high end 124 may slope upwards. The lower part of the high end 124 may be substantially vertical above the transporting surface. This may aid in the interference with the containers. According to one example, the high end is vertical, when the flight is in the elevated position.

The distance between the highest point of the flight 120 is optionally less than a distance D between the transporting surface 108 and the diverter. This allows the flights 120 of the conveyor to pass under the diverter 116, in both directions. The flight 120 is thus optionally arranged to be able to pass under the diverter 116, but should still have a height sufficient to interact with the return deposit containers. The height of the flight 120 may be within a range of 8-25mm. The height is adapted to force cylidrical or substantially cylindrical containers out of a stationary rolling state.A height of 8 mm up to 15 mm is many times sufficient. Preferably the height is within a range of 10-12mm. In some examples, the height is within a range of 8-12mm. The height of the flights 120 may be below 8mm in some examples. In some examples, the height may be above 15mm. In some examples, the height may be within a range of 8-15mm. In a larger application, the height may be above 25mm. The inventors have seen that a flight having a hight with the range of 8-25 is very effective in getting a container out of an stationary rolling state; the higher the flight the more effective it is at solving blockage, while a lower height is advantageous as it provides a smaller flight extension when the transportation surface is facing downwards, especially as there might be some slack in the conveyor belt.

The height of the flight 120 is thus correlated to the container received in the container return system. Depending on which type of container the container return system is configured for, such as cans, bottles, cartons, or any other packages, the height of the flight will be able to interact with the container and travel under the diverter 116.

The flights 120 are preferably configured and shaped such that any container directly between the diverter 116 and the flight 120 will roll over the flight 120, for example by making the high end slope upwards in the intended return direction.

The transporting surface 108 may comprise a cut out or opening for the flight through which the flight may protrude. It is preferred that the gap between the elevated flight 120 and the adjacent conveyor surface is at most 5 mm, so as to reduce the risk of containers getting stuck in the gap. The gap may be 1mm in a preferred example. In other examples, the gap may be 0.3-5mm. The high end 124 of the flight is in a preferred example rounded. A rounded high end 124 may minimize the gap formed, between the transporting surface and the high end, when raising and collapsing the flight 120. A gap in the collapsed position may provide a pinch hazard in the access region 112 and is thus preferably filled with the collapsed flight.

The deposit containers transported on the conveyor are often light weight and optionally cylinder shaped or substantially cylinder shaped. A (substantially) cylinder shaped container has a (substantially) round cross-section along a portion or a major extension of its length. When a light container is cylinder shaped or substantially cylinder shaped and transported on the conveyor, there is a risk that the container ending up in a stationary rolling state or an endless spin. The stationary rolling state may occur at any place along the conveyor, and this means that the container keeps spinning around a center axis or a length axis of the container, and does not follow the flow or path of transportation;the container may even roll slightly backwards . The center axis or length axis of the container intersects with both the top and bottom of the contianer Many times the container spin in a backwards direction The flights 120 as described herein may prevent that containers end up in an endless spin by interfering with the containers on the conveyor. Such an interference is advantageous as it may e.g. push the container out of the stationary rolling state.

As can be seen in Fig. 2c, the high end 124 of the flight may have a rounded top. As can be seen, the flight 120 may have a rounded bottom at the high end 124 of the wedge shape. The rounded surfaces may aid when a container ends up between the diverter 116 and the flight 120 such that the container can more easily roll over the top surface, than if the top was arranged as a sharp edge. The top portion of the flight 120 may be substantially flat. The top portion of the flight 120 may be curved.

In some examples the top surface 126 may be rounded, and/or curved along one or two perpendicular axis. In other implementations the top surface 126 may be chamfered. A shower door is normally flat, or curved along only one axis. A shower door that is curved along only one axis, it is curved as seen along a horizontal line, but straight as seen along a vertical line. A bowl is curved along two orthogonal axis (both along a horizontal line, as well as along a vertical line.)

The flight 120 may comprise a recess 121 which enables the flight 120 to move between the collapsed and elevated position. The recess 121 can be a closed hole in some examples. The flight 120 may comprise a second recess 123 at the low end 122 of the flight 120. The second recess 123 can be a closed hole in some examples. Implementations where the flight 120 comprises the recess 121 and the second recess 123 can enable attachment of the flight 120 to the conveyor via a snap function. The flight 120 can thus be attached by a small push force. This allows for a facilitated upgrade of already assembled container return systems. There is no need to disassemble a container return system or a conveyor in order to attach the flight 120.

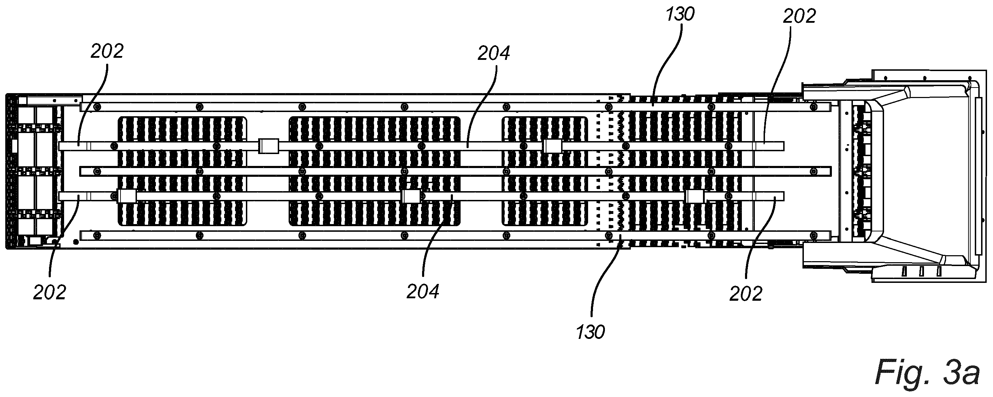

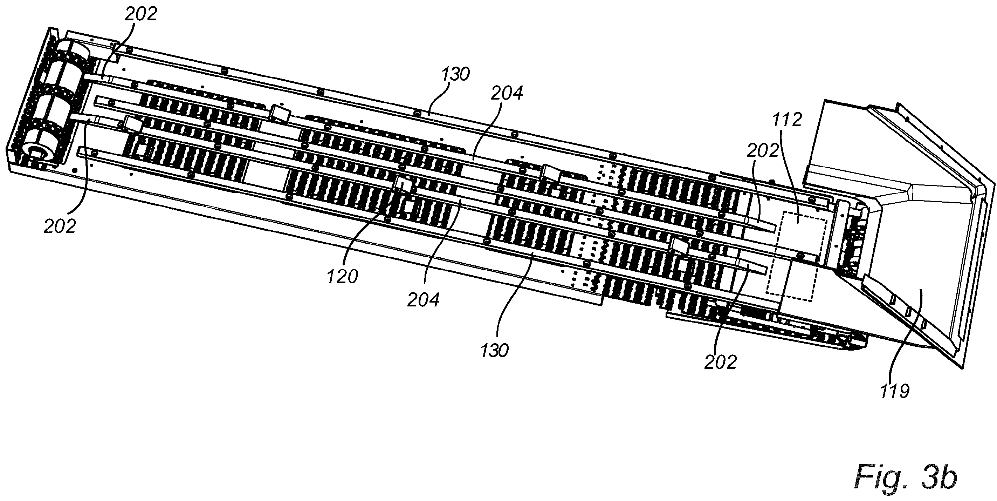

Turning now to Fig. 3a and 3b showing a top view of the bi-directional conveyor 102. The system comprises at least one pair of elevation member 202 and a retention member 204. In the disclosed figure there are two retention members 204, and four elevation members 202.

The elevation members 202 causes the flight 120 to go from the collapsed position to the elevated position. The elevation member 202 is arranged beneath the transporting surface 108 and advances gradually closer to said transporting surface 108 along the infeed direction ID. A retention member 204 is arranged under then transporting surface 108 after the elevation member 202 in the infeed direction ID. At the remote end 106 of the bi-directional conveyor 102, the system comprises a pair of elevations members allowing the flights to be raised to the elevated position when the conveyor moves in the return direction RD.

The elevation members 202 may force the flight 120 to pivot around an axis at the low end 122 and thereby raise the flight 120 into the elevated position. Many options are possible for embodying the elevation members 202 in order to move the flight 120 from the collapsed position to the elevated position. For instance, the flight 120 may be elevated via a camming mechanism. In other examples, the flights 120 may be parallel lifted in order to be elevated. Some arrangement may comprise floating means for raising the flight 120, or any means for pushing. A camming mechanism may further aid the flight 120 when it is supposed to collapse into the collapsed position.

As is evident form the figures, at the front end 104, the elevation members 202 are located at a distance from the end of the conveyor for providing the access region 112. With this configuration the bi-directional conveyor is configured such that all flights 120 are in the collapsed position in the access region 112. It is preferred that the flight collapses under the act of gravity before reaching the access region 112, however, if this is not the case due to one reason or another because there is no retention member 202 or elevation member 204 in the access region 112, if a flight 120 has not collapsed a touch or light press to the flight 120 in the access region 112 will push the flight 120 into the collapsed position. The flight is thus preferably configured to collapse upon reaching a stationary finger when the transporting surface 108 is moving in the return direction RD.

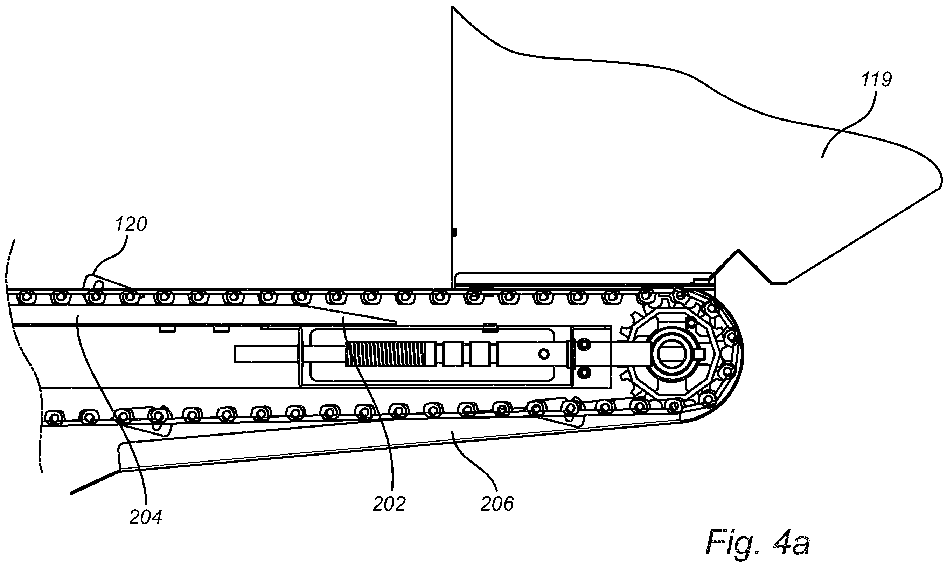

Turning to Fig 4a is a closeup side view of the front end 104 of the bi-directional conveyor 102. As can be seen, the elevation member 202 can have the shape of a ramp gradually advancing closer to the transporting surface 108, and thereby, when the flight abuts the ramp, the flight 120 can pivot gradually and reach the elevated position. The retention member 204 may be an extension of the elevation member 202. The retention member 204 may be a separate unit from the elevation member 202.

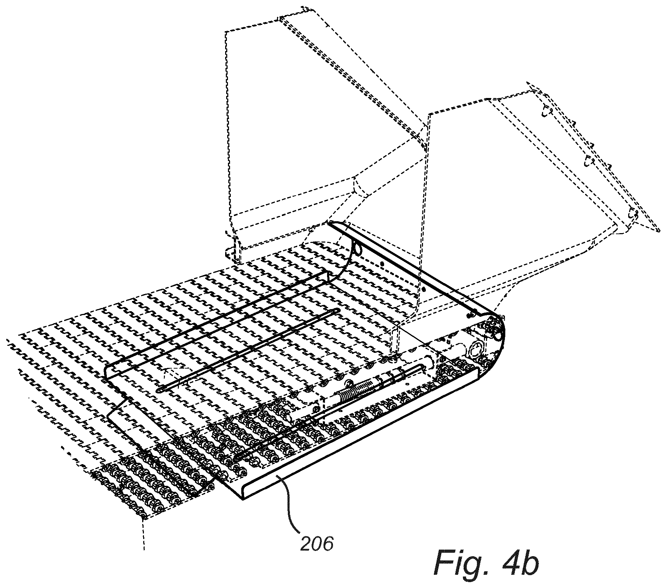

Also seen in Fig. 4a and 4b is a front ramp 206 extending under the bi-direction conveyor 102 at the front end 104. The front ramp 206 forces the flight 120 to be in the collapsed position when the flight 120 pass over the edge at the front end 104, when the conveyor is in the receive mode and the conveyor is moving in the infeed direction ID. Gravity may be keeping the flight extended in the elevated position when the flights 120 are on the underside of the bi-direction conveyor 102.

When the bi-directional conveyor 102 runs in the return mode, the front ramp 206 that extends to the upper side of the conveyor, forces any elevation of the flights 120 to be fully collapsed when going around the edge of the conveyor.

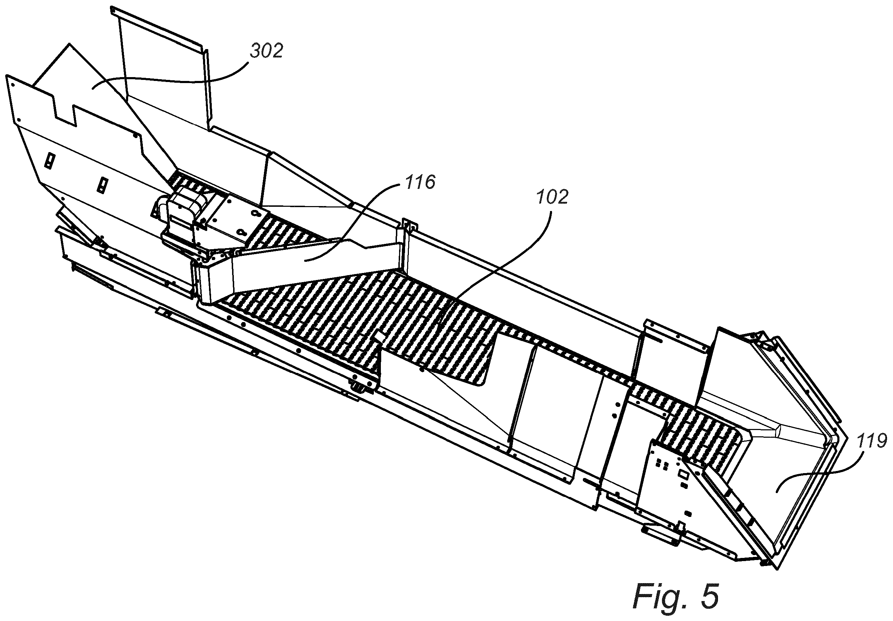

Remote of the remote end 106 of the bidirectional conveyor 102, the system may comprise a rear ramp 302. This remote ramp 302 is shown in Fig. 5. The remote ramp 302 may be located above the conveyor at the remote region 114.

In some implementations the remote ramp 306 is used to transport the containers that have been deemed not accepted by the classification unit back onto the bi-directional conveyor 102. Containers that are not accepted can in some examples be returned to the bi-directional conveyor 102 in both the receive mode and in the return mode.

If the not accepted containers are returned to bi-directional conveyor 102 in the receive mode, the remote ramp 302 is preferably arranged as a stop wall such that containers do not fall of the bi-directional conveyor 102. Thereby when the diverter 116 is in the diverting position, the not accepted items will stay in the region between the diverter and the remote ramp 302. Upon placing the diverter 116 in the non-diverting position, the containers will return to the access region 112.

If the not accepted containers are returned to bi-directional conveyor 102 in the return mode, the diverter is preferably in the non-diverting position so that the containers can move freely towards the access region 112 and the infeed region 110.

Further, the container return system may comprise two side rails 130. The side rails 130 may be arranged on a respective side of the transporting surface of the conveyor. The side rails 130 may prevent containers from falling off the bi-directional conveyor 102.

The container return system may be configured to receive a predetermined type of container. The deposit return container may have a predetermined minimum height and minimum width. At least one flight 120 may be arranged on the conveyor at a distance from said side rail being less than the minimum height of the deposit return container. With the configuration, there is advantageously provided a container return system, with a reduced risk of containers getting stuck between the side edge of the conveyor and the flights. If the container transported on the transporting surface 108 ends up at the side of the conveyor, the flight 120 will with ease be able to interact with the container to keep in moving in the transportation direction.

The flight 120 and/or the transporting surface described herein may be made of any suitable material. For example, glass, metal, polymer, or plastic, or any suitable combination thereof.

In some examples, the container return system may comprise more than one bi-directional conveyor. A second bi-directional conveyor may in some examples be used to transport diverted containers towards a classification unit.

In some examples of the container return system, the system comprises a bi-directional conveyor 102, and at least one flight, an elevation member and a retention member as described herein. The system may comprise a singulation unit located in proximity to the classification unit.

Below the remote end 106 and/or below the front end 104 there may be placed a bucket or a collector for collecting trash or objects that are disturbing the transportation of the containers.

In some aspects of the inventive concept, the infeed region 110 and the access region 112 may be adjacent one another side by side at the front end. The container return system may thus comprise a separator after the infeed opening such that containers land on the infeed region of the bi-directional conveyor. In such a configuration, there is no substantial distance form the front end of the conveyor to the elevation member 202 in the infeed region 110. Hence in such configurations the flight may be elevated in the infeed region. In the return mode of such a configuration, the container return system, may comprise a means for directing the returned deposit return containers to the side of the conveyor having the access region 112. In this case, the infeed region 110 and the access region do not overlap but are separate. All flights 120 are in the collapsed position in the access region. The infeed opening may thus comprise an access opening. The access opening may be arranged such as to prevent that the a user putting hands in the access opening does not reach the infeed region 110.

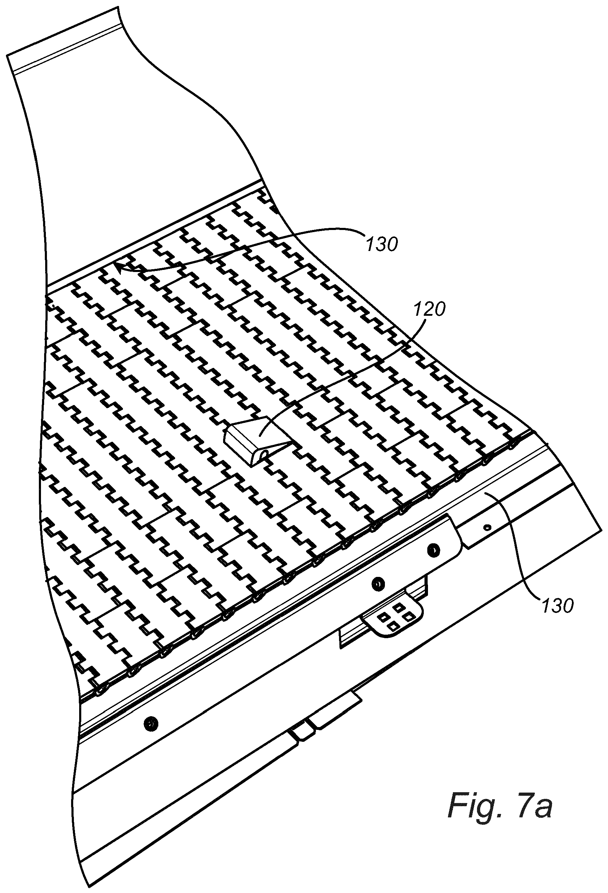

Turning to Fig. 7a-7c, a close up view of a flight 120 is shown. As can be seen, the belt is a modular belt. The modular belt may provide the conveyor with flexibility in how the conveyor can be arranged, such as curved etc.

The modular belt pieces may have different sizes. Preferably, the length of the modular belt pieces, as seen along the transport direction, is the same for each belt piece for the whole belt. The width, being orthogonal to the length, may vary. This belt is made up of belt pieces of three different designs, all designs having the same length but different widths. All three designs are present on each row. The belt pieces may be arranged such that the flight 120 is attached between two belt pieces.

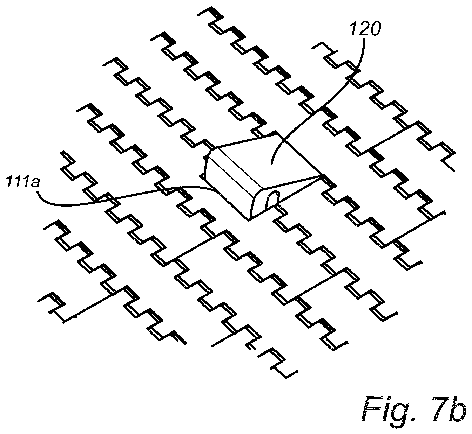

In Fig. 7b, an example of the conveyor is shown , wherein the modular belt comprises a cut out for the flight 120. The flight 120 is shown in the elevated position. A gap 111a can be seen between the high end 120 side of the flight 120 and the belt piece. In examples, where the high end 124 is curved, specifically when the curvature coincides with a pivot point of the flight 120, optionally gap 111a is consistent when the flight 120 is in the elevated and collapsed position. Thereby preventing pinching points. Moreover with such configuration, the size of the gap 111a may be substantially constant, while the flight 120 moves from the collapsed position, to the elevated position.

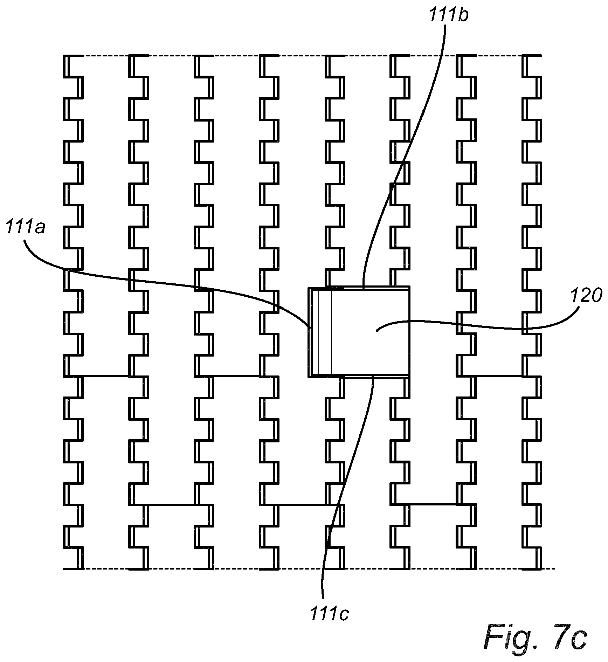

Fig 7c show a top view of the flight 120 in the cut-out, wherein the flight is in a collapsed position. A gap 111b, 111c may be present on the sides of the flight 120. Such gap 111b, 111c may prevent the flight 120 from getting stuck in the elevated position, the collapsed position, or a position therebetween. In some examples the gap 111a, 111b, 111c is 1mm. in other examples the gap 111a, 111b, 111c may be 0,3-5mm. In some examples the gap has the same size on all sides of the flight 120.

## Claims

1. A container return system configured to receive a bulk of deposit return containers, such as used food or beverage containers through an infeed opening, the container return system comprising:
a classification unit configured to classify containers into a category selected from a group comprising at least accepted and not accepted,
a bi-directional conveyor (102) having a front end (104), a remote end (106) and a transporting surface (108) extending between said front end (104) and said remote end(106), which bi-directional conveyor (102) comprises an infeed region (110) and an access region (112) both arranged at the front end (104 of the bi-directional conveyor (102) and the bi-directional conveyor (102) further comprises a remote region (114) which is arranged closer to the remote end (106) of the bi-directional conveyor (102) compared to said access region (112), and the bi-directional conveyor (102) being configured to move the transporting surface (108) in an infeed direction (ID) and a return direction (RD) which two directions are opposite to each other,
which container return system has a receive mode and a return mode and which bi-directional conveyor (102) is configured to in the receive mode: transport deposit return containers from said infeed region (110) towards classification unit by moving the transporting surface (108) in the infeed direction (ID); and
in the return mode: transport deposit return containers from said remote region (114) to said access region (112), where a user may pick up the deposit return containers;
wherein
said container return system further comprises a diverter (116) having a diverting position wherein the diverter (116) is arranged across and at a distance above said transporting surface (108), and being configured to steer a deposit return container to the side of said conveyor when arranged in said diverting position and the deposit return containers are transported by said bi-directional conveyor (102) from the infeed region (110) towards the classification unit,
said bi-directional conveyor (102) comprises:
at least one wedge shaped flight (120), each wedge shaped flight (120) having a low end (122), a high end (124), a top surface (126)and a bottom surface (128) and being pivotably attached to said bi-directional conveyor (102) and pivotable between a collapsed position and an elevated position, wherein each wedge shaped flight (120) in its elevated position extends higher above the transporting surface (108) of said conveyor compared to when the wedge shaped flight (120) is in its collapsed position,
at least one pair of an elevation member (202) and a retention member (204) arranged adjacent to each other, which elevation member (202) is arranged beneath and gradually closer to said transporting surface (108) along the infeed direction (ID) of the conveyor, and configured to pivot said wedge shaped flight (120) from the collapsed position to the upraised position when said wedge shaped flight (120) passes said elevation member (202) in the infeed direction (ID);
and which retention member (204) arranged beneath said transporting surface (108) and after said retention member (204) in the infeed direction (ID) and being configured to retain the wedge shaped flight (120) in the elevated position when said wedge shaped flight (120) passes said retention member (204) in the infeed direction (ID),
wherein at least when said wedge shaped flight (120) is in its elevated position:
- the highest point of the wedge shaped flight (120) coincides with the junction between the high end (124) and the top surface (126) of the wedge shaped flight (120),
- the high end (124) of the wedge shaped flight (120) trails the low end (122) of the wedge shaped flight (120) when the transporting surface (108) moves in the return direction (RD),
- the top surface (126) slopes downwards as seen in the return direction (RD),
- at least the upper third of the high end (124) slopes upwards as seen in the return direction (RD),
- the top surface (126) is longer than the height of the high end (124),
- the height of the wedge shaped flight (120) is lower that the distance between the transporting surface (108) and the diverter (116) to enable the wedge shaped flight (120) to pass under the diverter,
wherein all the pairs of elevation members (202) and retention members (204) are arranged outside the access region (112).

2. The container return system of claim 1, wherein the diverter (116) is movable between a diverting position and a non-diverting position.

3. The container return system of claim 1 or 2, wherein each wedge shaped flight (120) comprises a recess (121, 123) configured such that the wedge shaped flight (120) can be attached to the conveyor via a snap attachment.

4. The container return system of any one of the preceding claims wherein the conveyor comprises a plurality of the wedge shaped flights (120) arranged in a zig zag pattern along the conveyor in the infeed direction (ID).

5. The container return system of any one of the preceding claims, wherein the deposit return containers have a predetermined minimum height and minimum width, and said conveyor return system further comprises two side rails (130), each rail being arranged on a respective distal side of the transporting surface in the infeed direction, and at least one wedge shaped flight (120) is attached to the conveyor at a distance from one of said side rails (130), which distance is less than the minimum height.

6. The container return system of any one of the preceding claims, wherein each wedge shaped flight (120) has a rounded top portion, and/or wherein the top surface (126) is substantially flat and/or curved.

7. The container return system of any one of the preceding claims, wherein the lower part of said high end (124) is substantially vertical.

8. The container return system of any one of the preceding claims, wherein in an event of a wedge shaped flight (120) being in the upraised position in the access region (112), the wedge shaped flight (120) is configured to return to the collapsed position upon reaching a stationary finger and the transporting surface is moving in the return direction (RD).

9. The container return system of any one of the preceding claims, wherein the transporting surface (108) and/or each wedge shaped flight (120) is made of polymeric material such as plastic.

10. The container return system of any one of the preceding claims, further comprising a slide or chute (119) configured for transporting the deposit return containers from said infeed opening to said infeed region (110).

11. The container return system of any one of the preceding claims, wherein the infeed region (110) and the access region (112) are at least partially overlapping.

12. The container return system of any one of the preceding claims, wherein the high end (124) is curved such that the center of said curvature coincide with a pivot point of the wedge shaped flight (120).

## Patentansprüche

1. Behälterrücknahmesystem, das dazu ausgelegt ist, eine Menge von Pfandrücknahmebehältern, wie etwa gebrauchte Lebensmittel- oder Getränkebehälter, durch eine Einspeiseöffnung aufzunehmen, wobei das Behälterrücknahmesystem Folgendes umfasst:
eine Klassifizierungseinheit, die dazu ausgelegt ist, Behälter in eine Kategorie zu klassifizieren, die aus einer Gruppe ausgewählt ist, die zumindest angenommen und nicht angenommen umfasst,
einen bidirektionalen Förderer (102) mit einem vorderen Ende (104), einem entfernten Ende (106) und einer Transportfläche (108), die sich zwischen dem vorderen Ende (104) und dem entfernten Ende (106) erstreckt, wobei der bidirektionale Förderer (102) einen Einspeisebereich (110) und einen Zugangsbereich (112) umfasst, die beide am vorderen Ende (104) des bidirektionalen Förderers (102) angeordnet sind, und der bidirektionale Förderer (102) ferner einen entfernten Bereich (114) umfasst, der im Vergleich zum Zugangsbereich (112) näher am entfernten Ende (106) des bidirektionalen Förderers (102) angeordnet ist, und wobei der bidirektionale Förderer (102) dazu ausgelegt ist, die Transportfläche (108) in eine Einspeiserichtung (ID) und eine Rücklaufrichtung (RD) zu bewegen, wobei die zwei Richtungen einander entgegengesetzt sind,
wobei das Behälterrücknahmesystem einen Aufnahmemodus und einen Rücklaufmodus aufweist und wobei der bidirektionale Förderer (102) dazu ausgelegt ist:
im Aufnahmemodus: Pfandrücknahmebehälter durch Bewegen der Transportfläche (108) in die Einspeiserichtung (ID) vom Einspeisebereich (110) in Richtung der Klassifizierungseinheit zu transportieren und
im Rücklaufmodus: Pfandrücknahmebehälter vom entfernten Bereich (114) zum Zugangsbereich (112) zu transportieren, wo ein Benutzer die Pfandrücknahmebehälter aufnehmen kann; wobei
das Behälterrücknahmesystem ferner eine Umlenkvorrichtung (116) mit einer Umlenkposition umfasst, in der die Umlenkvorrichtung (116) quer und in einem Abstand über der Transportfläche (108) angeordnet ist, und die dazu ausgelegt ist, einen Pfandrücknahmebehälter zur Seite des Förderers zu lenken, wenn sie in der Umlenkposition angeordnet ist, und die Pfandrücknahmebehälter durch den bidirektionalen Förderer (102) vom Einspeisebereich (110) zur Klassifizierungseinheit transportiert werden,
der bidirektionale Förderer (102) Folgendes umfasst:
mindestens einen keilförmigen Steg (120), wobei jeder keilförmige Steg (120) ein unteres Ende (122), ein oberes Ende (124), eine obere Fläche (126) und eine untere Fläche (128) aufweist und schwenkbar am bidirektionalen Förderer (102) angebracht und zwischen einer zusammengeklappten Position und einer erhöhten Position schwenkbar ist, wobei sich jeder keilförmige Steg (120) in seiner erhöhten Position höher über der Transportfläche (108) des Förderers erstreckt als wenn sich der keilförmige Steg (120) in seiner zusammengeklappten Position befindet,
mindestens ein Paar eines Erhöhungselements (202) und eines Rückhalteelements (204), die benachbart zueinander angeordnet sind, wobei das Erhöhungselement (202) unterhalb und allmählich näher an der Transportfläche (108) entlang der Einspeiserichtung (ID) des Förderers angeordnet und dazu ausgelegt ist, den keilförmigen Steg (120) von der zusammengeklappten Position in die aufrechte Position zu schwenken, wenn der keilförmige Steg (120) das Erhöhungselement (202) in der Einspeiserichtung (ID) passiert;
und wobei das Rückhalteelement (204) unterhalb der Transportfläche (108) und hinter dem Rückhalteelement (204) in der Einspeiserichtung (ID) angeordnet und dazu ausgelegt ist, den keilförmigen Steg (120) in der erhöhten Position zu halten, wenn der keilförmige Steg (120) das Rückhalteelement (204) in der Einspeiserichtung (ID) passiert,
wobei zumindest dann, wenn sich der keilförmige Steg (120) in seiner erhöhten Position befindet:
- der höchste Punkt des keilförmigen Stegs (120) mit der Verbindung zwischen dem oberen Ende (124) und der oberen Fläche (126) des keilförmigen Stegs (120) zusammenfällt;
- das obere Ende (124) des keilförmigen Stegs (120) dem unteren Ende (122) des keilförmigen Stegs (120) nachläuft, wenn sich die Transportfläche (108) in die Rücklaufrichtung (RD) bewegt;
- die obere Fläche (126) in Rücklaufrichtung (RD) gesehen nach unten geneigt ist,
- mindestens das obere Drittel des oberen Endes (124) in Rücklaufrichtung (RD) gesehen nach oben geneigt ist,
- die obere Fläche (126) länger ist als die Höhe des oberen Endes (124),
- die Höhe des keilförmigen Stegs (120) geringer ist als der Abstand zwischen der Transportfläche (108) und der Umlenkvorrichtung (116), damit der keilförmige Steg (120) unter der Umlenkvorrichtung hindurchgehen kann;
wobei alle Paare von Erhöhungselementen (202) und Rückhalteelementen (204) außerhalb des Zugangsbereichs (112) angeordnet sind.

2. Behälterrücknahmesystem nach Anspruch 1, wobei die Umlenkvorrichtung (116) zwischen einer Umlenkposition und einer Nichtumlenkposition beweglich ist.

3. Behälterrücknahmesystem nach Anspruch 1 oder 2, wobei jeder keilförmige Steg (120) eine Aussparung (121, 123) umfasst, die so ausgelegt ist, dass der keilförmige Steg (120) über eine Einrastbefestigung am Förderer angebracht werden kann.

4. Behälterrücknahmesystem nach einem der vorhergehenden Ansprüche, wobei der Förderer mehrere keilförmige Stege (120) umfasst, die in einem Zickzackmuster entlang des Förderers in der Einspeiserichtung (ID) angeordnet sind.

5. Behälterrücknahmesystem nach einem der vorhergehenden Ansprüche, wobei die Pfandrücknahmebehälter eine vorbestimmte Mindesthöhe und Mindestbreite aufweisen und das Fördererrücknahmesystem ferner zwei Seitenschienen (130) umfasst, wobei jede Schiene auf einer jeweiligen distalen Seite der Transportfläche in der Einspeiserichtung angeordnet ist und mindestens ein keilförmiger Steg (120) am Förderer in einem Abstand von einer der Seitenschienen (130) angebracht ist, wobei der Abstand kleiner als die Mindesthöhe ist.

6. Behälterrücknahmesystem nach einem der vorhergehenden Ansprüche, wobei jeder keilförmige Steg (120) einen abgerundeten oberen Abschnitt aufweist und/oder wobei die obere Fläche (126) im Wesentlichen plan und/oder gekrümmt ist.

7. Behälterrücknahmesystem nach einem der vorhergehenden Ansprüche, wobei der untere Teil des oberen Endes (124) im Wesentlichen vertikal ist.

8. Behälterrücknahmesystem nach einem der vorhergehenden Ansprüche, wobei, falls sich ein keilförmiger Steg (120) in der erhöhten Position im Zugangsbereich (112) befindet, der keilförmige Steg (120) dazu ausgelegt ist, in die zusammengeklappte Position zurückzukehren, wenn ein stationärer Finger erreicht wird und sich die Transportfläche in der Rücklaufrichtung (RD) bewegt.

9. Behälterrücknahmesystem nach einem der vorhergehenden Ansprüche, wobei die Transportfläche (108) und/oder jeder keilförmige Steg (120) aus polymerem Material, wie etwa Kunststoff, hergestellt ist.

10. Behälterrücknahmesystem nach einem der vorhergehenden Ansprüche, ferner umfassend eine Rutsche oder Schurre (119), die zum Transportieren der Pfandrücknahmebehälter von der Einspeiseöffnung zum Einspeisebereich (110) ausgelegt ist.

11. Behälterrücknahmesystem nach einem der vorhergehenden Ansprüche, wobei sich der Einspeisebereich (110) und der Zugangsbereich (112) zumindest teilweise überlagern.

12. Behälterrücknahmesystem nach einem der vorhergehenden Ansprüche, wobei das obere Ende (124) derart gekrümmt ist, dass der Mittelpunkt der Krümmung mit einem Drehpunkt des keilförmigen Stegs (120) zusammenfällt.

## Revendications

1. Système de retour de récipients conçu pour recevoir un volume de récipients de retour pour recyclage, tels que des récipients d'aliments ou de boisson usagés, par l'intermédiaire d'une ouverture d'alimentation, le système de retour de récipients comprenant :
une unité de classification conçue pour classer les récipients dans une catégorie sélectionnée dans un groupe comprenant au moins la catégorie des récipients acceptés et la catégorie des récipients non acceptés,
un transporteur bidirectionnel (102) ayant une extrémité avant (104), une extrémité éloignée (106) et une surface de transport (108) s'étendant entre ladite extrémité avant (104) et ladite extrémité éloignée (106), ledit transporteur bidirectionnel (102) comprenant une région d'alimentation (110) et une région d'accès (112) toutes deux disposées à l'extrémité avant (104) du transporteur bidirectionnel (102) et le transporteur bidirectionnel (102) comprenant en outre une région éloignée (114) qui est disposée plus près de l'extrémité éloignée (106) du transporteur bidirectionnel (102) par comparaison à ladite région d'accès (112), et le transporteur bidirectionnel (102) étant conçu pour déplacer la surface de transport (108) dans un sens d'alimentation (ID) et un sens de retour (RD), ces deux sens étant opposés l'une à l'autre,
ledit système de retour de récipients possédant un mode de réception et un mode de retour et ledit transporteur bidirectionnel (102) étant conçu pour
en mode de réception : transporter les récipients de retour pour recyclage de ladite région d'alimentation (110) vers l'unité de classification en déplaçant la surface de transport (108) dans le sens d'alimentation (ID) ; et
en mode de retour : transporter les récipients de retour pour recyclage de ladite région éloignée (114) à ladite région d'accès (112), où un utilisateur peut collecter les récipients de retour pour recyclage ;
où
ledit système de retour de récipients comprend en outre un déviateur (116) ayant une position de déviation, dans laquelle le déviateur (116) est disposé en travers et à une certaine distance au-dessus de ladite surface de transport (108), et étant conçu pour diriger un récipient de retour pour recyclage vers le côté dudit transporteur lorsqu'il est placé dans ladite position de déviation et que les récipients de retour pour recyclage sont transportés par ledit transporteur bidirectionnel (102) de la région d'alimentation (110) vers l'unité de classification,
ledit transporteur bidirectionnel (102) comprend :
au moins un déflecteur cunéiforme (120), chaque déflecteur cunéiforme (120) ayant une extrémité basse (122), une extrémité haute (124), une surface supérieure (126) et une surface inférieure (128) et étant fixé de manière pivotante audit transporteur bidirectionnel (102) et pouvant pivoter entre une position abaissée et une position élevée, chaque déflecteur cunéiforme (120), dans sa position élevée, s'étendant plus haut au-dessus de la surface de transport (108) dudit transporteur que lorsque le déflecteur cunéiforme (120) est dans sa position abaissée,
au moins une paire composée d'un élément d'élévation (202) et d'un élément de retenue (204) disposés adjacents l'un à l'autre, ledit élément d'élévation (202) étant disposé au-dessous et progressivement plus près de ladite surface de transport (108) le long du sens d'alimentation (ID) du transporteur, et conçu pour faire pivoter ledit déflecteur cunéiforme (120) de la position abaissée à la position élevée lorsque ledit déflecteur cunéiforme (120) passe le long dudit élément d'élévation (202) dans le sens d'alimentation (ID) ;
et ledit élément de retenue (204) étant disposé sous ladite surface de transport (108) et après ledit élément de retenue (204) dans le sens d'alimentation (ID) et étant conçu pour retenir le déflecteur cunéiforme (120) en position élevée lorsque ledit déflecteur cunéiforme (120) passe le long dudit élément de retenue (204) dans le sens d'alimentation (ID),
où, au moins lorsque ledit déflecteur cunéiforme (120) est dans sa position élevée :
- le point le plus haut du déflecteur cunéiforme (120) coïncide avec la jonction entre l'extrémité haute (124) et la surface supérieure (126) du déflecteur cunéiforme (120),
- l'extrémité haute (124) du déflecteur cunéiforme (120) suit l'extrémité basse (122) du déflecteur cunéiforme (120) lorsque la surface de transport (108) se déplace dans le sens de retour (RD),
- la surface supérieure (126) est inclinée vers le bas selon une vue dans le sens de retour (RD),
- au moins le tiers supérieur de l'extrémité haute (124) est incliné vers le haut selon une vue dans le sens de retour (RD),
- la surface supérieure (126) est plus longue que la hauteur de l'extrémité haute (124),
- la hauteur du déflecteur cunéiforme (120) est inférieure à la distance entre la surface de transport (108) et le déviateur (116) pour permettre au déflecteur cunéiforme (120) de passer sous le déviateur,
où toutes les paires d'éléments d'élévation (202) et d'éléments de retenue (204) sont disposées à l'extérieur de la région d'accès (112).

2. Système de retour de récipients selon la revendication 1, dans lequel le déviateur (116) est mobile entre une position de déviation et une position de non-déviation.

3. Système de retour de récipients selon la revendication 1 ou 2, dans lequel chaque déflecteur cunéiforme (120) comprend un renfoncement (121, 123) conçu de telle sorte que le déflecteur cunéiforme (120) puisse être fixé au transporteur par encliquetage.

4. Système de retour de récipients selon l'une quelconque des revendications précédentes, dans lequel le transporteur comprend une pluralité de déflecteurs cunéiformes (120) agencés en zigzag le long du transporteur dans le sens d'alimentation (ID).

5. Système de retour de récipients selon l'une quelconque des revendications précédentes, dans lequel les récipients de retour pour recyclage ont une hauteur minimale et une largeur minimale prédéterminées, et ledit système de retour de récipients comprenant en outre deux rails latéraux (130), chaque rail étant placé sur un côté distal respectif de la surface de transport dans le sens d'alimentation, et au moins un déflecteur cunéiforme (120) étant fixé au transporteur à une certaine distance de l'un desdits rails latéraux (130), ladite distance étant inférieure à la hauteur minimale.

6. Système de retour de récipients selon l'une quelconque des revendications précédentes, dans lequel chaque déflecteur cunéiforme (120) a une partie supérieure arrondie, et/ou dans lequel la surface supérieure (126) est sensiblement plate et/ou incurvée.

7. Système de retour de récipients selon l'une quelconque des revendications précédentes, dans lequel la partie inférieure de ladite extrémité haute (124) est sensiblement verticale.

8. Système de retour de récipients selon l'une quelconque des revendications précédentes, dans lequel, dans le cas où un déflecteur cunéiforme (120) est dans la position élevée dans la région d'accès (112), le déflecteur cunéiforme (120) est conçu pour revenir à la position abaissée lorsqu'il atteint un doigt fixe et que la surface de transport se déplace dans le sens de retour (RD) .

9. Système de retour de récipients selon l'une quelconque des revendications précédentes, dans lequel la surface de transport (108) et/ou chaque déflecteur cunéiforme (120) est réalisé en un matériau polymère tel qu'une matière plastique.

10. Système de retour de récipients selon l'une quelconque des revendications précédentes, comprenant en outre une rampe ou une goulotte (119) conçue pour transporter les récipients de retour pour recyclage depuis ladite ouverture d'alimentation jusqu'à ladite région d'alimentation (110).

11. Système de retour de récipients selon l'une quelconque des revendications précédentes, dans lequel la région d'alimentation (110) et la région d'accès (112) se chevauchent au moins partiellement.

12. Système de retour de récipients selon l'une quelconque des revendications précédentes, dans lequel l'extrémité haute (124) est incurvée de telle sorte que le centre de ladite courbure coïncide avec un point de pivotement du déflecteur cunéiforme (120).
